# EUROPÄISCHE PATENTSCHRIFT

(11) **EP 0 697 050 B1**
(45) Veröffentlichungstag und Bekanntmachung des Hinweises auf die Patenterteilung: **03.12.1997**
(21) Anmeldenummer: 94913445.6
(22) Anmeldetag: 03.05.1994
(51) Int. Cl.: E03F 3/06, F16L 55/162

(54) **VERFAHREN ZUM AUSKLEIDEN EINES KANALS UND EINBRING- UND RÜCKHOLSCHLITTEN ZUR DURCHFÜHRUNG DES VERFAHRENS**
PROCESS FOR LINING A CHANNEL AND FITTING AND WITHDRAWAL SLIDE FOR IMPLEMENTING IT
PROCEDE PERMETTANT DE CHEMISER DES CANALISATIONS ET CHARIOT D'INSERTION ET DE RETRAIT POUR LA MISE EN OEUVRE DUDIT PROCEDE

(30) Priorität: 05.05.1993 AT 885/93
(43) Veröffentlichungstag der Anmeldung: 21.02.1996
(73) Patentinhaber: KLUG KANAL-, LEITUNGS- UND UMWELTSANIERUNGS- GESELLSCHAFT M.B.H., A-3244 Ruprechtshofen (AT)
(72) Erfinder: SÜNDERMANN, Franz, A-3244 Ruprechtshofen (AT)
(74) Vertreter: Weinzinger, Arnulf, Dipl.-Ing.
(86) Internationale Anmeldenummer: AT9400059
(87) Internationale Veröffentlichungsnummer: WO9425695

(56) Entgegenhaltungen:
- EP-A- 0 145 266
- EP-A- 0 184 366
- DE-B- 1 232 721
- US-A- 4 371 569

## Beschreibung

Die Erfindung betrifft ein Verfahren zum Auskleiden eines im wesentlichen horizontal verlaufenden Abwasserkanals, bei welchem Verfahren in einen vorhandenen und eventuell beschädigten Kanal ein Innenrohr, wie ein Futterrohr, Liner oder Reliner, eingeführt und der Ringraum zwischen der Außenfläche des Innenrohres und der Innenfläche des Kanals mit Füllmaterial ausgefüllt wird, welches mit einer oder mehreren Zufuhrleitung(en), die in den genannten Ringraum führt bzw. führen, in diesen Ringraum eingefüllt wird. Gegenstand der Erfindung bildet auch eine bei der Durchführung des Verfahrens einsetzbare Einbring- und Rückholvorrichtung, welche Vorrichtung aus einer oder mehreren Zufuhrleitung(en) und einem oder mehreren mit der bzw. den Zufuhrleitung(en) verbundenen Schlitten besteht.

Die Sanierung schadhaft gewordener, meist alter Kanalisationsleitungen mit nicht begehbarem Qeurschnitt ist für die Betreiber von Abwasserrohrnetzen zu einem schwierigen Problem geworden und erfordert zunehmend einen immer höher werdenden finanziellen und personellen Aufwand. Die erheblichen Strecken alter Kanalisations- bzw. Entwässerungsleitungen mit bereits bestehenden oder in Kürze zu erwartenden Schäden sind sowohl in abwassertechnischer Hinsicht (Verstopfungen, Straßeneinbrüche usw.) als auch in umwelttechnischer Hinsicht problematisch, da das Grundwasser durch austretende Abwässer verunreinigt wird. Aufgrund beengter Trassenverhältnisse und hoher Verkehrsdichte kommt für die Erneuerung der vorhandenen Leitungen meist nur eine unterirdische Bauweise in Frage, wobei folgende Anforderungen zu erfüllen sind: Keine oder nur geringe Erdarbeiten, kurze Bauzeit, minimale Störungen des Netzbetriebs, Erhalt oder Verbesserung der vorhandenen hydraulischen Verhältnisse und geringere Kosten im Vergleich zum Neubau in offener Bauweise.

Unter den Sanierungsverfahren gewinnen laufend jene Verfahren an Bedeutung, die den bestehenden schadhaften Kanal neu auskleiden, indem ein neues Innenrohr in den Kanal eingeführt und der verbleibende Ringraum zwischen der Außenfläche des Innenrohrs und der Innenfläche des Kanals mit Füllmaterial ausgefüllt wird. Das Füllen des Ringraums erweist sich jedoch als schwierig, insbesondere wenn Strecken von mehr als zehn Metern zu verfüllen sind. Bisher (siehe z.B. die in der EP-A-O 184 366 beschriebene Technik) wird das Füllmaterial unter Druck von einer Seite in den Ringraum eingedrückt oder ohne Druck eingeschwemmt. Die vollständige Füllung des Ringraums kann kaum garantiert und auch nicht kontrolliert werden.

Hiervon ausgehend liegt die Aufgabe der vorliegenden Erfindung darin, ein Verfahren eingangs erwähnter Art anzugeben, das sich durch leichtere Handhabung, vollständige und kontrollierbare Füllung des Ringraums, große Wahlfreiheit beim Füllmaterial und kürzere Füllzeiten auszeichnet.

Das erfindungsgemäße Verfahren eingangs erwähnter Art besteht weiters darin, daß die Zufuhrleitung(en) mittels einer Führung in den Ringraum über dessen Länge verlaufend eingebracht wird bzw. werden, bis sich diese Zufuhrleitung(en) über die ganze Länge des Innenrohres erstreckt bzw. erstrecken, wobei die Führung entweder durch das Innenrohr selbst gebildet ist, indem die Zufuhrleitung gemeinsam mit dem Innenrohr in den Kanal eingeführt wird, oder die Führung durch ein Hilfsseil gebildet ist, das gemeinsam mit dem Innenrohr an der Außenfläche des Innenrohres in den im Kanal gebildeten Ringraum eingeführt wird, wobei anschließend die Zufuhrleitung mittels des Hilfsseiles in den Ringraum eingebracht wird, oder die Führung durch ein Führungsseil gebildet ist, das entlang der Innenfläche des Kanals gespannt wird, wobei die Zufuhrleitung mittels am Führungsseil verschiebbarer Aufhängungen längs des Führungsseiles eingebracht wird, und diese Zufuhrleitung(en) anschließend mit einer Rückholbewegung ausgebracht wird bzw. werden und während des Ausbringens der Zufuhrleitung(en) durch diese Zufuhrleitung(en) Füllmaterial in einer zum vollständigen Verfüllen des Ringraumes ausreichenden Menge in den Ringraum abgegeben wird. Durch diese Ausbildung kann der vorstehend angeführten Zielsetzung gut entsprochen werden. Die vorgesehene Führung, mit der die Zufuhrleitung(en) in den Ringraum eingebracht und beim danach erfolgenden Ausbringen geleitet wird bzw. werden, erleichtert diese Vorgänge und läßt auch durch die mit dem Führen erzielte Positionierung dieser Leitung(en) auf einfache Weise ein gutes Fließverhalten des Füllmaterials beim Einbringen desselben in den Ringraum erzielen.

Es kann erwähnt werden, daß aus der DE-B-12 32 721 eine Technik zum Auskleiden eines im wesentlichen vertikal verlaufenden Mauerwerkskanals, nämlich eines Schornsteinzuges oder Luftkanals, bekannt ist, bei der in diesen Mauerwerkskanal ein aufblasbarer Schlauch eingeführt und danach der zwischen diesem Schlauch und der Innenfläche dieses Kanals verbliebene Raum mit Mörtel gefüllt wird. Hierzu wird von oben her in den genannten Raum ein biegsamer Zufuhrschlauch frei eingeführt und danach mittels dieses Zufuhrschlauches der Mörtel in den genannten Raum eingebracht.

Es ist weiter aus der EP-A-145 266 eine Technik zum Auskleiden von beschädigten Kanalrohren bekannt, bei der auf die Innenseite dieser Kanalrohre eine Auskleidungsschicht aufgesprüht wird. Hierzu wird eine auf mehreren Schlitten angeordnete Sprüheinrichtung verwendet, welche durch die auszukleidende Rohrleitung gezogen wird und der Auskleidungsmaterial über eine Zufuhrleitung zugeführt wird.

Eine hinsichtlich der Baustellenorganisation und des Arbeitsablaufes günstige Ausführungsform des erfindungsgemäßen Verfahrens ist dadurch gekennzeichnet, daß eine oder mehrere Zufuhrleitung(en) von einem Ende des Innenrohres bis zum anderen Ende des Innenrohres reichend in den Ringraum eingebracht wird bzw. werden.

Gemäß einer anderen Ausführungsform des erfindungsgemäßen Verfahrens, mit welcher große Längen der jeweils auszukleidenden Kanalabschnitte bewältigbar sind, ist es vorteilhaft, daß von beiden Enden des Innenrohres her je eine oder mehrere Zufuhrleitung(en) bis zu einer im Mittenbereich der Längserstreckung des Innenrohres gelegenen Stelle eingebracht und von dort wieder zu ihrer Einbringstelle rückgeholt werden.

Es ist für das Erzielen einer möglichst stabilen Lagerung des Innenrohrs im auszukleidenden Kanal vorteilhaft, wenn das Innenrohr am Grund des auszukleidenden Kanals angeordnet wird, wobei sich eine Ausführungsform beim praktischen Arbeiten als günstig erwiesen hat, bei der das Innenrohr in an sich bekannter Weise mit Wasser gefüllt wird und so gegen den Grund des Kanals gezwungen wird, wobei der Ringraum im Querschnitt gesehen sichelförmig ausgebildet wird.

Hinsichtlich des Einfließens des Füllmaterials in den Ringraum zwischen Kanalwand und Innenrohr ist es vorteilhaft, wenn man vorsieht, daß die Zufuhrleitung beim Einbringen und insbesondere beim Ausbringen genau über dem Innenrohr so hoch wie möglich im Ringraum geführt wird.

Um ein gleichmäßiges und vollständiges Verfüllen des Ringraums mit Füllmaterial zu gewährleisten, ist es günstig, mit Hilfe einer an der Zufuhrleitung, insbesondere in der Nähe einer Abgabedüse derselben, angeordneten, den Füllgrad des Ringraums meldenden Kontrolleinrichtung die Rückholgeschwindigkeit und/oder der Materialdruck in der Zufuhrleitung entsprechend dem verwendeten Füllmaterial und entsprechend dem Volumen des Ringraums laufend nachzuregeln. Eine verhältnismäßig einfache Ausbildung der Kontrolleinrichtung ergibt sich, wenn man als Kontrolleinrichtung eine Fernsehkamera verwendet. Man kann auch als Kontrolleinrichtung einen auf das Vorhandensein und/oder Nichtvorhandensein von Füllmaterial ansprechenden Sensor, z.B. einen Feuchtigkeitssensor, verwenden.

Für einen raschen Arbeitsablauf beim Verfüllen des Ringraums zwischen der Innenfläche des Kanals und dem Innenrohr ist es vorteilhaft, wenn die Zufuhrleitung in Form von zwei Schläuchen ausgebildet und als Füllmaterial ein unmittelbar vor der Abgabedüse zwangsgemischtes Zweikomponentenmaterial verwendet wird. Man kann solcherart ein Zweikomponentenmaterial einsetzen, welches ein rasches Härtungsverhalten hat, ohne daß damit Schwierigkeiten beim Auftreten von Zwangspausen entstehen, weil ja die Materialkomponenten erst unmittelbar vor dem Ausfließen des Materials in den Ringraum miteinander in Berührung und damit zur Reaktion gebracht werden. Solche Zweikomponentenmaterialien lassen auch einen großen Expansionsgrad und eine hohe Festigkeit erzielen. Man kann dabei sehr gute Praxiseigenschaften der Ringraumfüllung erhalten, wenn man als Füllmaterial einen eine statische Festigkeit aufweisenden, wasserverdrängenden, in Feuchtigkeit härtenden, alterungsstabilen, chemikalienfesten und umweltfreundlichen Zweikomponenten-PU-Schaum verwendet.

Eine sehr stabile, neutrale Füllung des Ringraums, welche auch eine sehr hohe Festigkeit aufweist, kann erzielt werden, wenn als Füllmaterial ein Leichtbeton verwendet wird. Ein besonders gute Füllverhalten, welches das Entstehen luftgefüllter Taschen mit großer Sicherheit ausschließt, kann erzielt werden, wenn als Füllmaterial eine Schlemme aus Wasser und Gasbetonkörnern verwendet wird.

Ein apparativ sehr einfaches Einbringen des Füllmaterials zum Ausfüllen des Ringraums kann erzielt werden, wenn man vorsieht, daß als Füllmaterial ein Einkomponenten-PU-Schaum oder ein spätreagierender, bereits vor dem Eintritt in die Zufuhrleitung gemischter Zweikomponenten-PU-Schaum verwendet wird.

Die im Rahmen der Erfindung vorgesehene Einbring- und Rückholvorrichtung, welche aus einer oder mehreren Zufuhrleitung(en) und einem oder mehreren mit der bzw. den Zufuhrleitung(en) verbundenen Schlitten besteht, zeichnet sich dadurch aus, daß der bzw. die Schlitten zwei durch einen Steg fest miteinander verbundene Kufen und eine Fixierung für die Zufuhrleitung aufweist bzw. aufweisen, mit der die Zufuhrleitung in annähernd gleichem Abstand von den Kufen und im wesentlichen parallel zu diesen fixiert ist, wobei der Abstand zwischen den Kufen geringer ist als die Summe der beiden Abstände zwischen der jeweiligen Kufe und der Zufuhrleitung und die Kufen als hinten und vorne spitz zulaufende längliche, rohrförmige Körper ausgebildet sind. Man kann so gute Positioniereigenschaften im Kanal bzw. im Ringraum desselben erzielen, wobei der Schlitten durch entsprechende Auslegung des Stegs ohne Schwierigkeiten an verschiedene Innenrohrdurchmesser angepaßt werden kann. Die genannte Ausbildung der Kufen läßt bei einfachem Aufbau eine sehr gute Stabilität des Schlittens erzielen, und es kann ein solcherart ausgebildeter Schlitten auch auf einfache Weise hergestellt werden. Solche Kufen sitzen gut am Innenrohr auf und passieren bei der Bewegung des Schlittens kleine Hindernisse problemlos.

Man kann Schlitten vorgenannter Art sehr einfach auf der Zufuhrleitung anbringen, z.B. indem man den Steg des Schlittens lösbar auf der Zufuhrleitung fixiert. Es ist dabei günstig, wenn der Schlitten in der Nähe einer an der Zufuhrleitung vorgesehenen Abgabedüse lösbar auf der Zufuhrleitung fixiert ist.

Die Erfindung bezieht sich auch auf eine Einbring- und Rückholvorrichtung mit mehreren Schlitten vorerwähnter Ausbildung, und es ist diese Einrichtung so ausgebildet, daß mehrere gleiche Schlitten in festgelegten Abständen an der Zufuhrleitung fixiert sind.

Die Erfindung wird nun anhand von Beispielen, unter Bezugnahme auf die grobschematisch gehaltenen Zeichnungsfiguren, weiter erläutert.

In der Zeichnung zeigen:

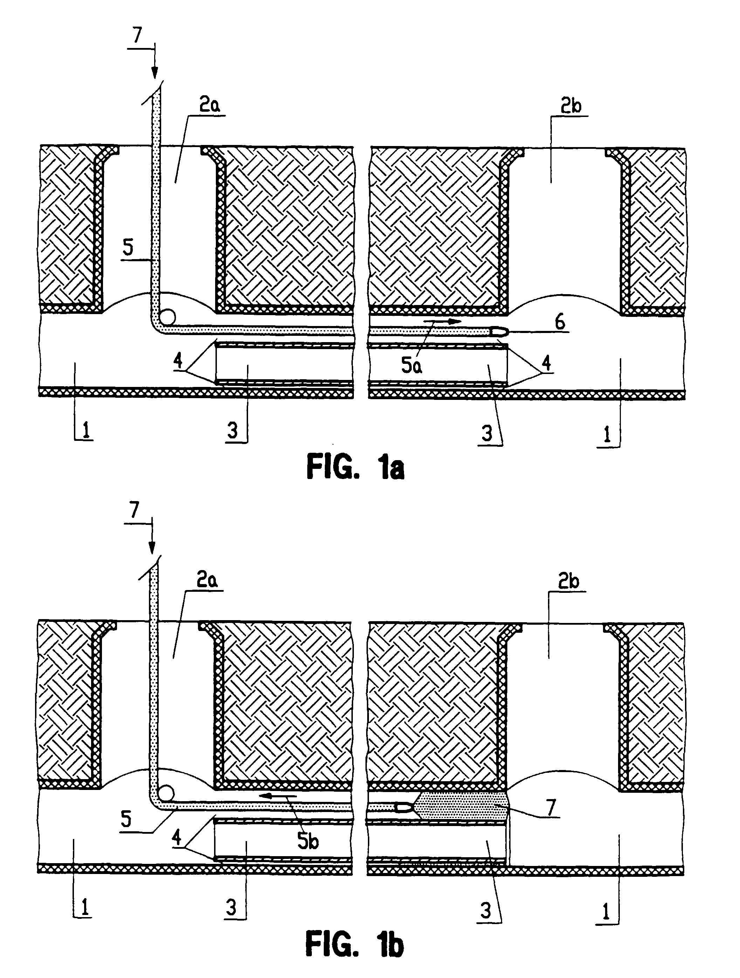

Die Fig. 1a und 1b zwei Stadien einer Ausführungsform des erfindungsgemäßen Verfahrens,
Fig. 2 eine Vorgangsweise beim Einbringen des Innenrohrs und der Zufuhrleitung in einen auszukleidenden Kanal,
die Fig. 3a und 3b zwei Stadien beim Einbringen von Innenrohr und Zufuhrleitung gemäß einer anderen Ausführungsform des erfindungsgemäßen Verfahrens und
Fig. 4 eine weitere Vorgangsweise beim Einbringen der Zufuhrleitung in einen auszukleidenden Kanal; die vorgenannten Figuren sind Längsschnitt-Darstellungen;
die Fig. 5a und 5b zeigen im Querschnitt zwei Stadien beim Auskleiden eines Kanals gemäß einer weiteren Ausführungsform des erfindungsgemäßen Verfahrens,
die Fig. 6a und 6b eine Ausführungsform eines im Rahmen der Erfindung vorgesehenen Schlittens in Ansicht von vorne und in Ansicht von unten,
Fig. 6c eine Variante eines solchen Schlittens in Ansicht von vorne,
Fig. 7 eine weitere Variante eines derartigen Schlittens, wieder in Ansicht von vorne,
Fig. 8 einen bereits mit einem Innenrohr versehenen auszukleidenden Kanal, in welchen ein Schlitten, wie er in Fig. 6c dargestellt ist, eingeführt ist, und
Fig. 9 eine Ausführungsform einer erfindungsgemäßen Einbring- und Rückholeinrichtung mit mehreren Schlitten in einer Ansicht.

Fig. la zeigt in grobschematischer Darstellung einen Kanal 1, der mit an die Oberfläche führenden Schächten 2a, 2b ausgestattet ist und der mit einer Auskleidung versehen werden soll, in einem Längsschnitt. Zur Bildung dieser Auskleidung ist in dem in Fig. la dargestellten Stadium in den Kanal 1 bereits ein Innenrohr 3 eingeführt. In den Ringraum 4, welcher sich zwischen der Innenfläche des Kanals 1 und der Außenfläche des Innenrohrs 3 befindet, ist eine Zufuhrleitung 5 eingebracht, welche vom Schacht 2a her im Sinne des Pfeils 5a vorgeschoben oder vorgezogen worden ist, und welche zum Einbringen eines Füllmaterials in den Ringraum 4 vorgesehen ist. Die schematisch dargestellte Zufuhrleitung 5 kann einen oder mehrere Rohre oder Schläuche umfassen, je nachdem das Füllmaterial 7, welches durch die Leitung 5 in den Ringraum eingebracht werden soll, aus einer oder aus mehreren Komponenten besteht. Am Austrittsende ist die Leitung 5 mit einer Abgabedüse 6 versehen. Die Leitung 5 wird danach im darauffolgenden Stadium des Verfahrens, welches in Fig. lb dargestellt ist, aus dem Kanal 1 bzw. aus dem in diesem Kanal gebildeten Ringraum 4 wieder ausgebracht, indem sie im Sinne des Pfeils 5b rückgeholt wird. Während dieser Rückholbewegung wird Füllmaterial 7 in einer zum vollständigen Verfüllen des Ringraums 4 ausreichenden Menge in diesen Ringraum abgegeben. Das Füllmaterial 7 ist eine erstarrende Masse, welche ausreichend fest ist, um das Innenrohr 3 im Kanal 1 stabil abzustützen, und welche auch gute Dichteigenschaften aufweist.

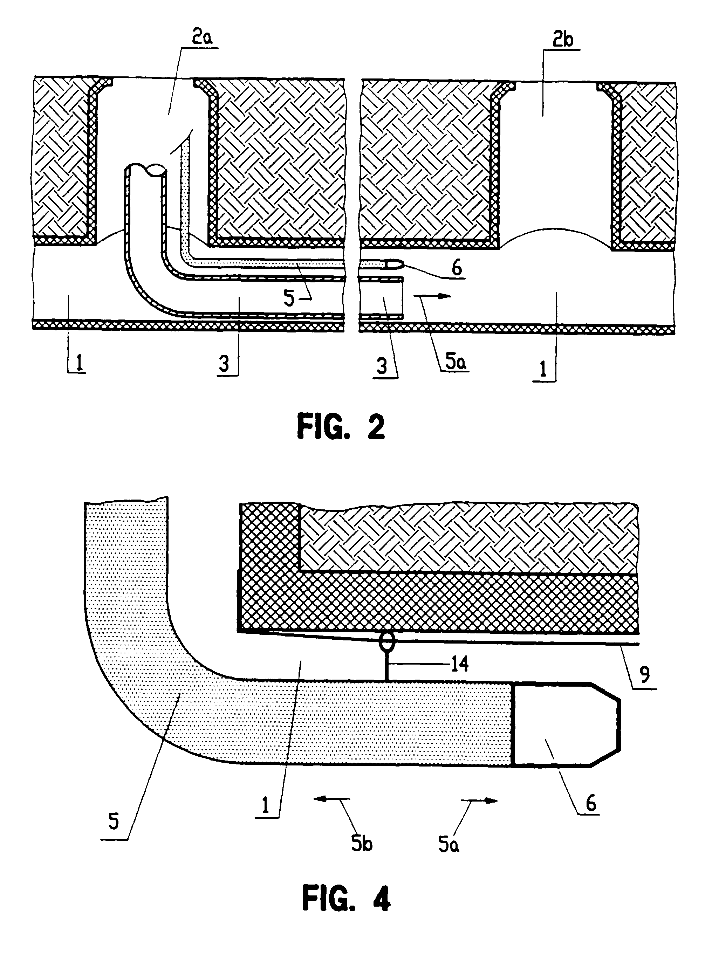

Fig. 2 zeigt wie, gemäß einer Ausführungsform des erfindungsgemäßen Verfahrens, die zum Einbringen von Füllmaterial in den auszukleidenden Kanal 1 vorgesehene Zufuhrleitung 5 gemeinsam mit dem Innenrohr 3, welches zur Auskleidung des Kanals 1 in diesen eingeführt wird, eingebracht wird. Das Einbringen erfolgt dabei unter Vorwärtsbewegen des Innenrohrs 3 und der Zufuhrleitung 5 im Sinne des Pfeils 5a, und es ist für dieses gemeinsame Vorwärtsbewegen in der Regel vorteilhaft, wenn man die Zufuhrleitung 5 lösbar am Innenrohr 3 fixiert. Sobald der Einbringvorgang abgeschlossen ist, wird eine derartige Fixierung gelöst und es wird danach der zwischen der Innenfläche des Kanals 1 und der Außenfläche des Innenrohrs 3 befindliche Ringraum, analog wie dies in Fig. lb dargestellt ist, mit Füllmaterial gefüllt.

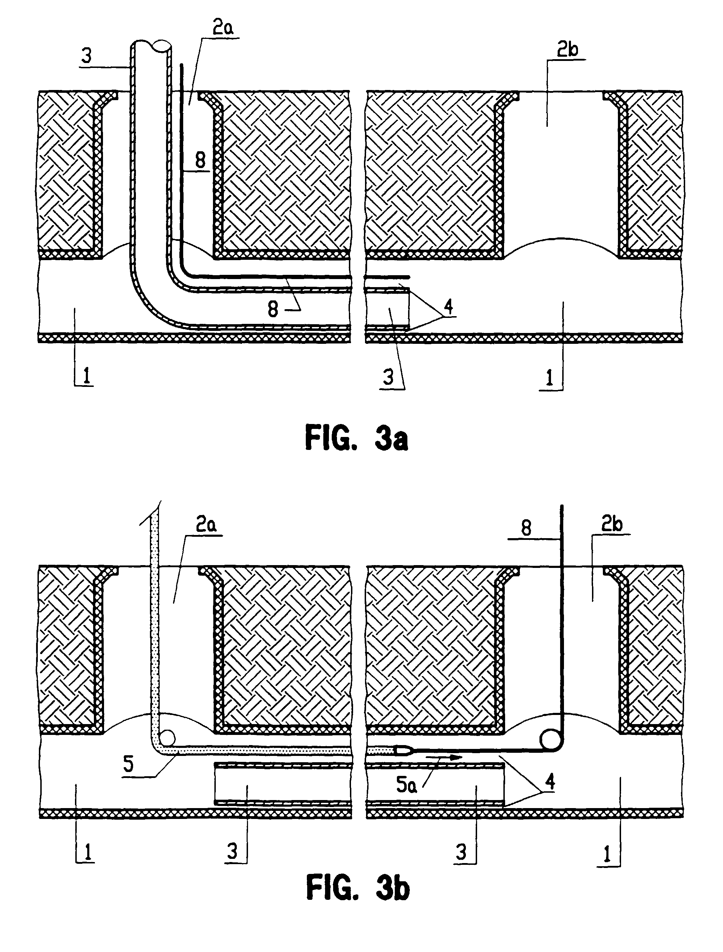

Bei der in den Fig. 3a und 3b dargestellten Ausführungsform des erfindungsgemäßen Verfahrens wird beim Einführen des Innenrohrs 3 in den auszukleidenden Kanal 1 gemeinsam mit dem Innenrohr 3 ein Hilfsseil 8, welches an der Außenfläche des Innenrohrs 3 angeordnet ist, in den Kanal eingeführt, wobei dieses Hilfsseil den zwischen dem Innenrohr 3 und der Innenfläche des Kanals 1 gebildeten Ringraum 4 durchläuft. In der darauffolgenden Phase, welche in Fig. 3b dargestellt ist, wird mit dem Hilfsseil 8, indem dieses durch den Schacht 2b nach außen gezogen wird, die Zufuhrleitung 5, wie durch den Pfeil 5a versinnbildlicht ist, in den Ringraum 4 eingebracht.

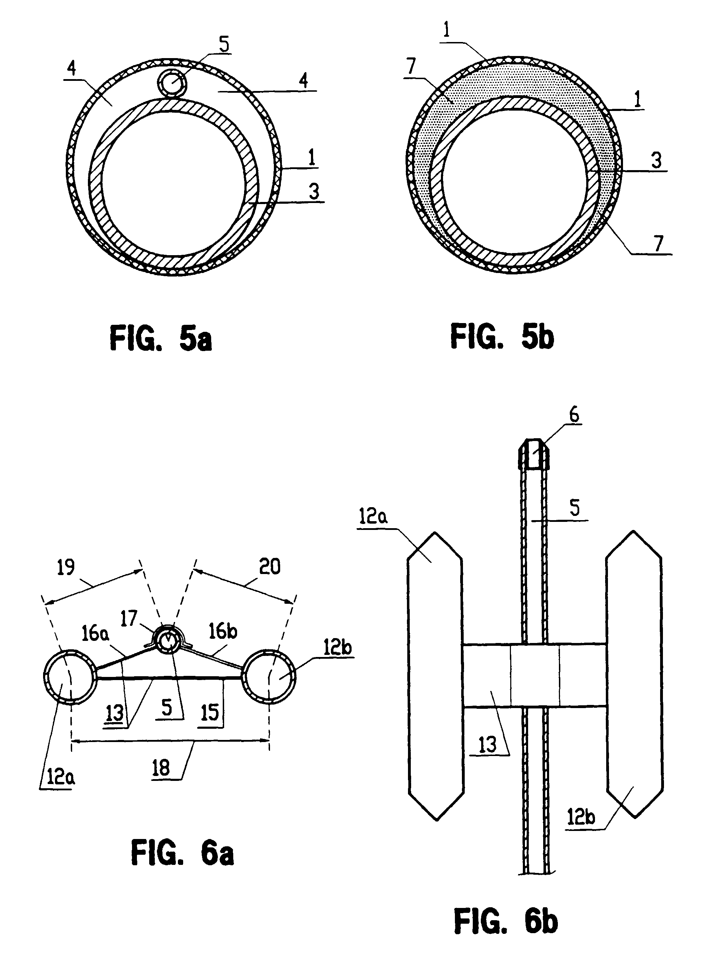

Fig. 4 zeigt eine weitere Technik zum Einbringen der Zufuhrleitung 5, wobei entlang der Innenfläche des Kanals 1 ein Führungsseil 9 gespannt wird, auf welchem verschiebbare Aufhängungen 14 angeordnet sind, an denen dann die Zufuhrleitung 5 fixiert wird. Die Zufuhrleitung 5 kann durch die solcherart gebildete Führung leicht und einfach im Sinne des Pfeils 5a in den mit Füllmaterial zu füllenden Bereich des Kanals 1 eingebracht und aus diesem Bereich im Sinn des Pfeils 5b rückgeholt werden.

Es ist für die stabile Lagerung des Innenrohrs 3 im Kanal 1 und für das Ausfüllen des zwischen dem Innenrohr 3 und dem Kanal 1 gebildeten Ringraums 4 von Vorteil, wenn das Innenrohr, wie in den Fig. 5a und 5b detaillierter ersichtlich ist, gegen den Grund des Kanals 1 hin angeordnet ist und sich solcherart ein im Querschnitt sichelförmig ausgebildeter Ringraum 4 ergibt. Man führt dabei die Zufuhrleitung 5 beim Einbringen und insbesondere beim Ausbringen, bei dem ja das Füllmaterial in den Ringraum 4 eingebracht wird, wie Fig. 5a zeigt, so hoch wie möglich im Ringraum 4, und es ergibt sich solcherart auf sehr einfache Weise ein vollständiges Ausfüllen des Ringraums 4 mit Füllmaterial 7, wie in Fig. 5b dargestellt ist.

Die in den Fig. 6a und 6b dargestellte Ausführungsform eines Einbring- und Rückholschlittens weist zwei Kufen 12a, 12b auf, welche durch einen Steg 13 miteinander verbunden sind. Dieser Steg 13 ist durch drei Streben 15, 16a, 16b gebildet, wobei die Streben 16a, 16b eine Fixierung 17 tragen, an der die Zufuhrleitung 5, die an ihrem Ende eine Abgabedüse 6 trägt, lösbar befestigt werden kann. Der Steg 13 ist so ausgebildet, daß der Abstand 18 zwischen den Kufen 12a, 12b kleiner ist als die Summe der beiden Abstände 19, 20 zwischen der jeweiligen Kufe 12a bzw. 12b und der Zufuhrleitung 5.

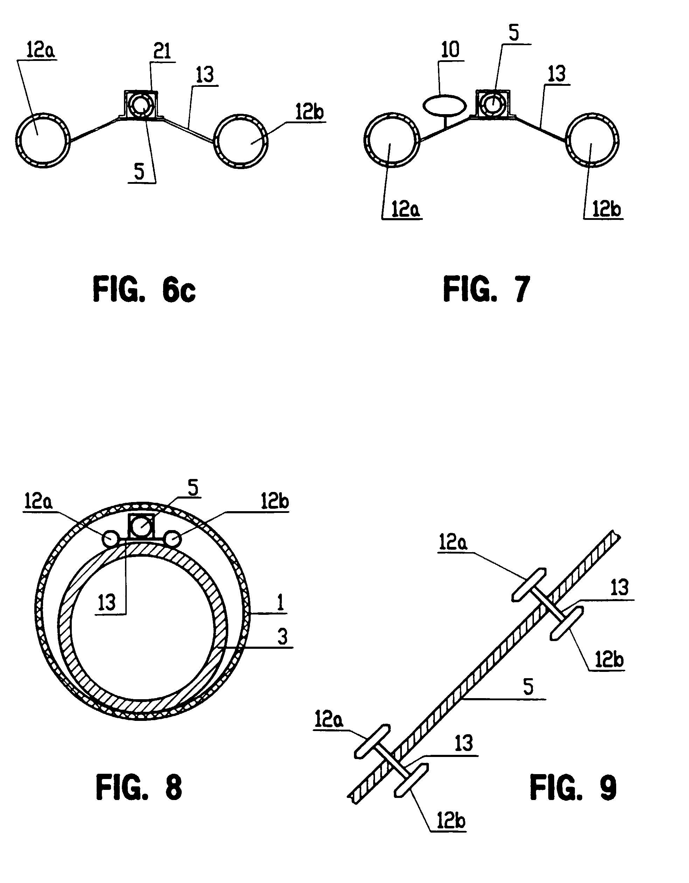

Bei der in Fig. 6c dargestellten Ausführungsform eines Einbring- und Rückholschlittens sind die beiden Kufen 12a und 12b über eine abgewinkelte Strebe 13 miteinander in Verbindung, welche in ihrer Mitte einen Haltebügel 21 trägt, mit dem die Zufuhrleitung 5 lösbar am Schlitten befestigt werden kann.

Bei der in Fig. 7 dargestellten Ausführungsform eines Einbring- und Rückholschlittens, welche baulich ähnlich wie die in Fig. 6c dargestellte Ausführungsform ausgebildet ist, ist eine Kontrolleinrichtung 10 vorgesehen, mit der das Einbringen von Füllmaterial in den Kanal überwacht werden kann, wobei eine solche Kontrolleinrichtung z.B. durch eine kleine Fernsehkamera gebildet sein kann.

Fig. 8 zeigt einen Kanal 1 im Querschnitt, wobei in den Kanal ein Innenrohr 3 eingebracht ist und im Ringraum 4 zwischen dem Innenrohr und der Innenfläche des Kanals 1 an der höchsten Stelle die von einem Schlitten 12a, 12b, 13 getragene Zufuhrleitung 5 geführt ist. Diese Art der Führung der Zufuhrleitung 5, d.h. des ausströmseitigen Endes derselben bzw. der am ausströmseitigen Ende der Zufuhrleitung vorgesehenen Abgabedüse 6, ermöglicht auf einfache Weise ein vollständiges Verfüllen des Ringraums 4 mit Füllmaterial.

Fig. 9 zeigt in einer Ansicht eine mit mehreren Schlitten der in den Fig. 6a bis 7 dargestellten Art gebildete Einbring- und Rückholeinrichtung, welche sich insbesondere dann als vorteilhaft erweist, wenn größere Längen eines Zufuhrrohrs 5 zu führen sind. Es ist dabei eine Anzahl von Schlitten, die aus Kufen 12a, 12b und Stegen 13 gebildet sind, in gegenseitigen Abständen angeordnet und mit der Zufuhrleitung 5 verbunden.

## Patentansprüche

1. Verfahren zum Auskleiden eines im wesentlichen horizontal verlaufenden Abwasserkanals, bei welchem Verfahren in einen vorhandenen und eventuell beschädigten Kanal (1) ein Innenrohr (3), wie ein Futterrohr, Liner oder Reliner, eingeführt und der Ringraum (4) zwischen der Außenfläche des Innenrohres (3) und der Innenfläche des Kanals (1) mit Füllmaterial ausgefüllt wird, welches mit einer oder mehreren Zufuhrleitung(en) (5), die in den genannten Ringraum (4) führt bzw. führen, in diesen Ringraum eingefüllt wird, dadurch gekennzeichnet, daß die Zufuhrleitung(en) (5) mittels einer Führung in den Ringraum über dessen Länge verlaufend eingebracht wird bzw. werden, bis sich diese Zufuhrleitung(en) über die ganze Länge des Innenrohres (3) erstreckt bzw. erstrecken, wobei die Führung entweder durch das Innenrohr (3) selbst gebildet ist, indem die Zufuhrleitung (5) gemeinsam mit dem Innenrohr (3) in den Kanal (1) eingeführt wird, oder die Führung durch ein Hilfsseil (8) gebildet ist, das gemeinsam mit dem Innenrohr (3) an der Außenfläche des Innenrohres in den im Kanal gebildeten Ringraum eingeführt wird, wobei anschließend die Zufuhrleitung (5) mittels des Hilfsseiles in den Ringraum (4) eingebracht wird, oder die Führung durch ein Führungsseil (9) gebildet ist, das entlang der Innenfläche des Kanals (1) gespannt wird, wobei die Zufuhrleitung (5) mittels am Führungsseil verschiebbarer Aufhängungen (14) längs des Führungsseiles (9) eingebracht wird, und diese Zufuhrleitung(en) anschließend mit einer Rückholbewegung ausgebracht wird bzw. werden und während des Ausbringens der Zufuhrleitung(en) (5) durch diese Zufuhrleitung(en) Füllmaterial (7) in einer zum vollständigen Verfüllen des Ringraumes (4) ausreichenden Menge in den Ringraum (4) abgegeben wird.

2. Verfahren nach Anspruch 1, dadurch gekennzeichnet, daß eine oder mehrere Zufuhrleitung(en) (5) von einem Ende des Innenrohres (3) bis zum anderen Ende des Innenrohres reichend in den Ringraum (4) eingebracht wird bzw. werden.

3. Verfahren nach Anspruch 1, dadurch gekennzeichnet, daß von beiden Enden des Innenrohres (3) her je eine oder mehrere Zufuhrleitung(en) (5) bis zu einer im Mittenbereich der Längserstreckung des Innenrohres (3) gelegenen Stelle eingebracht und von dort wieder zu ihrer Einbringstelle rückgeholt werden.

4. Verfahren nach einem der Ansprüche 1 bis 3, dadurch gekennzeichnet, daß die Zufuhrleitung (5) beim Einbringen und insbesondere beim Ausbringen genau über dem Innenrohr (3) so hoch wie möglich im Ringraum (4) geführt wird.

5. Verfahren nach einem der Ansprüche 1 bis 4, dadurch gekennzeichnet, daß als Füllmaterial (7) ein Leichtbeton verwendet wird.

6. Verfahren nach einem der Ansprüche 1 bis 4, dadurch gekennzeichnet, daß als Füllmaterial (7) eine Schlemme aus Wasser und Gasbetonkörnern verwendet wird.

7. Verfahren nach einem der Ansprüche 1 bis 4, dadurch gekennzeichnet, daß als Füllmaterial (7) ein Einkomponenten-PU-Schaum oder ein spätreagierender, bereits vor dem Eintritt in die Zufuhrleitung gemischter Zweikomponenten-PU-Schaum verwendet wird.

8. Verfahren nach einem der vorhergehenden Ansprüche, dadurch gekennzeichnet, daß an der Zufuhrleitung (5) bzw. an den Zufuhrleitungen (5) ein oder mehrere Schlitten (11) lösbar angebracht wird bzw. werden, welche die Zufuhrleitung(en) beim Einbringen in den Ringraum (4) und beim Rückholen aus diesem Ringraum führen, wobei ein bzw. mehrere Schlitten (11) verwendet wird bzw. werden, welche als Kufen (12a, 12b) hinten und vorne spitz zulaufende längliche rohrförmige Körper aufweisen, welche durch einen Steg (13) miteinander verbunden sind.

9. Einbring- und Rückholvorrichtung zur Durchführung des Verfahrens nach einem der Ansprüche 1 bis 8, welche Vorrichtung aus einer oder mehreren Zufuhrleitung(en) (5) und einem oder mehreren mit der bzw. den Zufuhrleitung(en) verbundenen Schlitten (11) besteht, dadurch gekennzeichnet, daß der bzw. die Schlitten (11) zwei durch einen Steg (13) fest miteinander verbundene Kufen (12a, 12b) und eine Fixierung (17) für die Zufuhrleitung (5) aufweist bzw. aufweisen, mit der die Zufuhrleitung in gleichem Abstand von den Kufen und parallel zu diesen fixiert ist, wobei der Abstand (15) zwischen den Kufen geringer ist als die Summe der beiden Abstände (16a, 16b) zwischen der jeweiligen Kufe und der Zufuhrleitung (5) und die Kufen (12a, 12b) als hinten und vorne spitz zulaufende längliche rohrförmige Körper ausgebildet sind.

10. Einbring- und Rückholvorrichtung nach Anspruch 9, dadurch gekennzeichnet, daß der Steg (13) lösbar auf der Zufuhrleitung (5) fixiert ist.

11. Einbring- und Rückholvorrichtung nach Anspruch 9 oder 10, dadurch gekennzeichnet, daß der Schlitten in der Nähe einer an der Zufuhrleitung (5) vorgesehenen Abgabedüse (6) auf der Zufuhrleitung (5) fixiert ist.

12. Einbring- und Rückholvorrichtung mit mehreren Schlitten nach einem der Ansprüche 9 bis 11, dadurch gekennzeichnet, daß mehrere gleiche Schlitten (11) in festgelegten Abständen an der Zufuhrleitung (5) fixiert sind.

## Claims

1. A method of lining a substantially horizontally extending sewer, in which method an inner pipe (3), such as a lining pipe, a liner or a reliner, is introduced into an already existing and possibly damaged sewer (1) and the annular space (4) between the outer surface of the inner pipe (3) and the inner surface of the sewer (1) is filled with filler, which filler is filled into this annular space by means of one or more supply duct(s) (5) leading into the said annular space (4), characterized in that the supply duct(s) (5) is (are) introduced into the annular space by means of a guide so as to extend over the longitudinal extension of the annular space until the said supply duct(s) extend(s) over the entire length of the inner pipe (3), said guide either being formed by the inner pipe (3) itself by introducing the supply duct (5) together with the inner pipe (3) into the sewer (1), or the guide being formed by an auxiliary rope (8) which is introduced into the annular space formed in the sewer together with the inner pipe (3) at the outer surface of the inner pipe, wherein subsequently the supply duct (5) is introduced into the annular space (4) by means of the auxiliary rope, or the guide is formed by a guide rope (9) which is tensioned along the inner surface of the sewer (1), wherein the supply duct (5) is introduced along the guide rope (9) by suspension means (14) displaceable on the guide rope, and the supply duct(s) subsequently is (are) removed by a withdrawing movement, and that during the removal of the supply duct(s) (5) filler (7) is delivered through said supply duct(s) into the annular space (4) in an amount sufficient to completely fill the annular space (4).

2. A method according to claim 1, characterized in that one or more supply duct(s) (5) is (are) introduced into the annular space (4) starting at one end of the inner pipe (3) and extending to the other end of the inner pipe.

3. A method according to claim 1, characterized in that one or more supply duct(s) (5) is (are) respectively introduced from each end of the inner pipe (3) as far as to a site located in the middle region of the longitudinal extension of the inner pipe (3) and from there is (are) removed back to the respective site of introduction thereof.

4. A method according to any one of claims 1 to 3, characterized in that the supply duct (5) , during introduction and particularly during the removal thereof, is guided precisely above the inner pipe (3), as high as possible in the annular space (4).

5. A method according to any one of claims 1 to 4, characterized in that a lightweight concrete is used as said filler (7).

6. A method according to any one of claims 1 to 4, characterized in that a grout made up of water and air concrete granules is used as said filler (7).

7. A method according to any one of claims 1 to 4, characterized in that a one-component PU foam or a late-reacting two-component PU foam already mixed before entering into the supply duct is used as said filler (7).

8. A method according to any one of the preceding claims, characterized in that one or more slide(s) (11) is (are) releasably attached to said supply duct(s) (5), said slide(s) guiding said supply duct(s) during introduction thereof into the annular space (4) and during removal thereof from this annular space, wherein one or more slide(s) (11) is (are) used which comprise(s) rearwardly and forwardly pointed elongate tubular bodies as skids (12a, 12b), which elongate bodies are interconnected by a web (13).

9. An introduction and removal arrangement for carrying out the method according to any one of claims 1 to 8, which arrangement comprises one or more supply duct(s) (5) and one or more slide(s) (11) connected with the supply duct(s), characterized in that the slide(s) (11) has (have) two skids (12a, 12b) fixedly interconnected by a web (13) and fixing means (17) for the supply duct (5), the supply duct being fixed by said fixing means at equal distances from the skids and in parallel thereto, the distance (15) between the skids being less than the sum of the two distances (16a, 16b) between the respective skid and the supply duct (5), and the skids (12a, 12b) being designed as rearwardly and forwardly pointed elongate tubular bodies.

10. An introduction and removal arrangement according to claim 9, characterized in that the web (13) is releasably fixed to the supply duct (5).

11. An introduction and removal arrangement according to claim 9 or 10, characterized in that the slide is fixed to the supply duct (5) in the vicinity of a delivery nozzle (6) provided on the supply duct (5).

12. An introduction and removal arrangement having several slides according to any one of claims 9 to 11, characterized in that several equal slides (11) are fixed to the supply duct (5) at pre-determined distances.

## Revendications

1. Procédé de chemisage d'une canalisation d'égout qui s'étend essentiellement horizontalement, procédé dans lequel on introduit dans une canalisation existante (I) et éventuellement endommagée un tube intérieur (3), tel qu'un tube de chemisage, de revêtement ou d'habillage, et on remplit l'espace annulaire (4) entre la surface extérieure du tube intérieur (3) et la surface intérieure de la canalisation (1) avec un matériau de remplissage, lequel est introduit dans cet espace annulaire au moyen d'un ou de plusieurs conduit(s) d'amenée (5) qui mène(nt) jusque dans ledit espace annulaire (4), caractérisé en ce que le(s) conduit(s) d'amenée (5) est(sont) amené(s) à l'aide d'un guidage jusque dans l'espace annulaire en s'étendant sur sa longueur, jusqu'à ce que ce(s) conduit(s) d'amenée s'étende(nt) sur la totalité de la longueur du tube intérieur (3), le guidage étant formé soit par le tube intérieur (3) lui-même en introduisant le(s) conduit(s) d'amenée (5) conjointement avec le tube intérieur (3) dans la canalisation (1), soit par un câble auxiliaire (8) qui est introduit conjointement avec le tube intérieur (3) au niveau de la surface extérieure du tube intérieur jusque dans l'espace annulaire formé dans la canalisation, et le(s) conduit(s) d'amenée (5) est(sont) ensuite introduit(s) dans l'espace annulaire (4) au moyen du câble auxiliaire, ou bien le guidage est formé par un câble de guidage (9) qui est tendu le long de la surface intérieure de la canalisation (1), et le(s) conduit(s) d'amenée (5) est(sont) introduit(s) le long du câble de guidage (9) au moyen d'accrochages (14) mobiles sur le câble de guidage, et ce(s) conduit(s) d'amenée est(sont) ensuite sorti(s) avec un mouvement de retour, et pendant la sortie de(s) conduit(s) d'amenée (5) on dépose du matériau de remplissage (7) dans l'espace annulaire (4) dans une quantité qui suffit pour le remplissage total de l'espace annulaire (4).

2. Procédé selon la revendication 1, caractérisé en ce qu'un ou plusieurs conduits d'amenée (5) est(sont) introduit(s) depuis une extrémité du tube intérieur (3) jusqu'à l'autre extrémité du tube intérieur en s'étendant dans l'espace annulaire (4).

3. Procédé selon la revendication 1, caractérisé en ce que depuis les deux extrémités du tube intérieur (3) on introduit respectivement un ou plusieurs conduit(s) d'amenée (5) jusqu'à un emplacement situé dans la région médiane de l'extension longitudinale du tube intérieur (3), et ils sont ramenés de cet emplacement à nouveau jusqu'à leur emplacement d'introduction.

4. Procédé selon l'une des revendications 1 à 3, caractérisé en ce que lors de l'introduction et en particulier lors du retour, le conduit d'amenée (5) est guidé de façon exacte au moyen du tube intérieur (3) aussi haut que possible dans l'espace annulaire (4).

5. Procédé selon l'une des revendications 1 à 4, caractérisé en ce que l'on utilise comme matériau de remplissage (7) un béton léger.

6. Procédé selon l'une des revendications 1 à 4, caractérisé en ce que l'on utilise comme matériau de remplissage (7) une boue formée d'eau et de particules de béton cellulaire.

7. Procédé selon l'une des revendications 1 à 4, caractérisé en ce que l'on utilise comme matériau de remplissage (7) une mousse de polyuréthane mono-composant ou une mousse de polyuréthane à deux composants à réaction tardive, déjà mélangés avant l'entrée dans le conduit d'amenée.

8. Procédé selon l'une des revendications précédentes, caractérisé en ce que l'on dispose sur le(s) conduit(s) d'amenée (5) un ou plusieurs plusieurs chariot(s) (11) de façon détachable, lequel(lesquels) guide(nt) le(s) conduit(s) d'amenée lors de l'introduction dans l'espace annulaire (4) et lors du retour hors de cet espace annulaire, et l'on utilise un ou plusieurs chariot(s) (11) qui comporte(nt) en tant que patins (12a, 12b) des corps de forme tubulaire allongés qui se terminent en pointe à l'avant et à l'arrière, lesquels sont reliés l'un à l'autre par une tige (13).

9. Appareil d'introduction et d'enlèvement pour mise en oeuvre du procédé selon l'une des revendications 1 à 8, ledit appareil étant composé d'un ou de plusieurs conduit(s) d'amenée (5) et d'un ou de plusieurs chariot(s) (11) relié(s) au(x) conduit(s) d'amenée, caractérisé en ce que le(s) chariot(s) (11) comporte(nt) deux patins (12a, 12b) reliés fermement l'un à l'autre par une tige (13), et une fixation (17) pour le(s) conduit(s) d'amenée (5), au moyen de laquelle le(s) conduits d'amenée est(sont) fixé(s) à la même distance des patins et parallèlement à ceux-ci, et la distance (15) entre les patins est plus petite que la somme des deux distances (16a, 16b) entre le patin respectif et le conduit d'amenée (5), et les patins (12a, 12b) sont réalisés sous forme de corps tubulaires allongés qui se terminent en pointe à l'arrière et à l'avant.

10. Appareil d'introduction et d'enlèvement selon la revendication 9, caractérisé en ce que la tige (13) est fixée de façon détachable au conduit d'amenée (5).

11. Appareil d'introduction et d'enlèvement selon l'une ou l'autre des revendications 9 et 10, caractérisé en ce que le chariot est fixé sur le conduit d'amenée (5) au voisinage d'une buse de sortie (6) prévue sur le conduit d'amenée (5).

12. Appareil d'introduction et d'enlèvement comportant plusieurs chariots selon l'une des revendications 9 à 11, caractérisé en ce que plusieurs chariots égaux (11) sont fixés sur le conduit d'amenée (5) à des distances fixées.
